# EUROPEAN PATENT SPECIFICATION

(11) **EP 1 223 706 B1**
(45) Date of publication and mention of the grant of the patent: **22.03.2006**
(21) Application number: 02250171.2
(22) Date of filing: 10.01.2002
(51) Int. Cl.: H04L 9/32, H04L 9/00

(54) **Encryption apparatus, authentication information assignment apparatus, encryption method, and authentication information assignment method**
Verschlüsselungsvorrichtung, Vorrichtung zum Zuweisen einer Authentifizierungsinformation, Verschlüsselungsverfahren, sowie Verfahren zum Zuweisen einer Authentifizierungsinformation
Dispositif de chiffrage, dispositif d'attribution d'une information d'authentification, procédé de chiffrage, et procédé d'attribution d'une information d'authentification.

(30) Priority: 12.01.2001 JP 2001005147
(43) Date of publication of application: 17.07.2002
(73) Proprietor: NTT DoCoMo, Inc., Tokyo 100-6150 (JP)
(72) Inventor: Yoshimura, Takeshi, Yokohama-shi, Kanagawa 236-0031 (JP); Suzuki, Takashi, Lafayette, CA 94549 (US); Kawahara, Toshiro, Brookline, MA 02446 (US); Etoh, Minoru, Yokohama-shi, Kanagawa 236-0053 (JP)
(74) Representative: Beresford, Keith Denis Lewis

(56) References cited:
- US-A- 4 159 468
- US-A- 5 444 782
- THORWIRTH N J ET AL: "Security methods for MP3 music delivery" ASILOMAR CONFERENCE ON SIGNALS, SYSTEMS AND COMPUTERS, 2000, pages 1831-1835, XP010535313 New York US
- ALATTAR A M ET AL: "Improved selective encryption techniques for secure transmission of MPEG video bit-streams" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, 24 October 1999 (1999-10-24), pages 256-260, XP010368705 ISBN: 0-7803-5467-2

## Description

The present invention relates to an encryption apparatus, authentication information assignment apparatus, encryption method, decryption method, and authentication information assignment method, which carry out encryption or authentication processing.

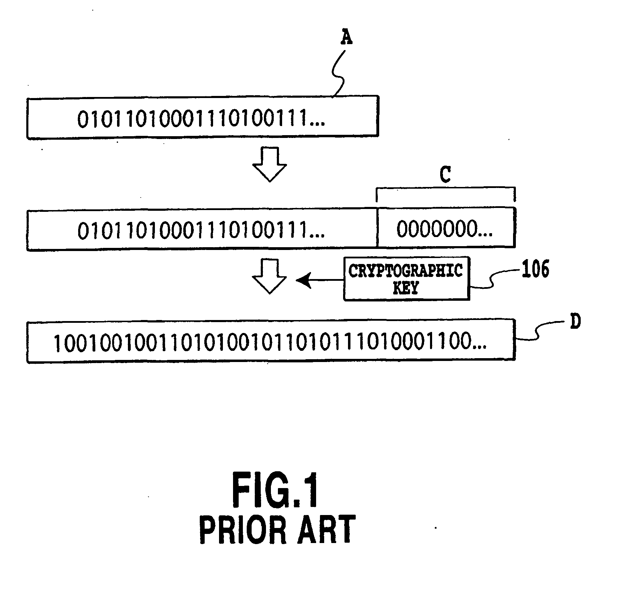

In a system that uses block cipher to encrypt a bit stream of media information such as voice information or image information transmitted via a communication system, an original bit stream (packet) A is provided with additional "0" bits C (padding) so that the packet is aligned to an integer multiple of a block length as illustrated in Fig. 1. Then, the bit stream undergone the padding is converted to another bit stream using a cryptographic key 106.

The bit stream D, which is transmitted after the encryption, is decrypted to the original bit stream A using a decryption key 106 at a receiving side.

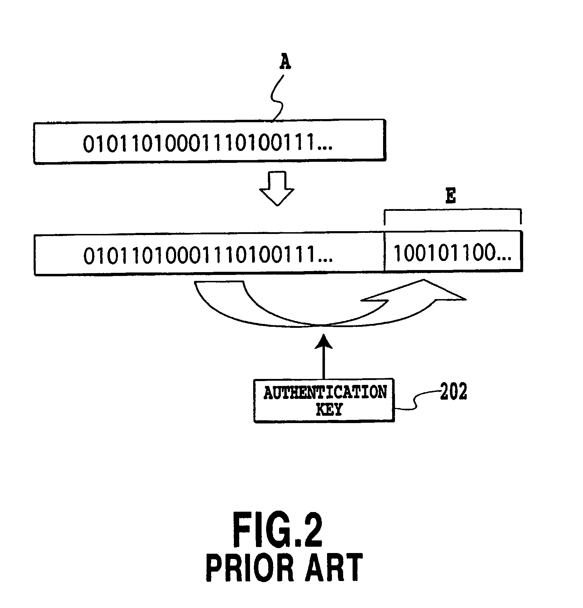

When the encryption system is applied to authentication, the original bit stream A is provided with additional authentication information E, which is obtained by converting the original bit stream A through a unidirectional function and by encrypting the resultant data by an authentication key 202 as shown in Fig. 2, and is transmitted.

On the other hand, the receiving side generates data by applying the same unidirectional function to the received original bit stream. Then, the receiving side authenticates the sender of the received bit stream by matching the resultant data with the authentication information attached to the original bit stream.

As a method of performing such encryption or authentication of a bit stream of media information, Japanese patent application laid-open No. 2000-59323, for example, discloses a technique capable of improving a problem of time consuming authentication of unimportant data. The technique decides the importance of digital AV data by a transmitting unit, and selects an authentication rule in accordance with the decision result.

On the other hand, Japanese patent application laid-open No. 5-56034 discloses a technique that conceals a digital signal on a digital signal transmission line in accordance with particular secret codes. The technique detects pauses in an analog voice signal, and changes the secret codes of the digital signal successively in response to the detection result, thereby concealing the digital signal.

The foregoing conventional encryption system or authentication system, however, carries out encryption or authentication of even a bit stream with a small number of bits or a bit stream that can be cryptanalyzed easily. Therefore, it is easy to cryptanalyze the ciphertext into the plaintext by calculating the original bit stream in a round robin algorithm. In other words, an intruder who tries to cryptanalyze can easily get a pair of the plaintext and ciphertext, making it easy to break the key.

In addition, carrying out encryption or authentication of the entire bit stream to be transmitted will increase the overhead and delay.

Furthermore, the foregoing conventional encryption system or authentication system has a problem of increasing the amount of the information to be transmitted because of the padding involved in the encryption, or the addition of the authentication information.

Moreover, the conventional encryption or authentication method of the media information has a problem of increasing the overhead because of the decision of the importance of the contents to be transmitted, or the successive change of the secret codes.

US-A-4,159,468 discloses a device for insertion in a communications line for verifying message integrity in a communications network. The device receives plain text messages and generates an authentication field by encrypting the plain text message and transmits the message with the authentication field appended thereto. Not all the message is encrypted. For example text may be encrypted by detecting a "start of text" (STX) character which will initiate encryption and an "end of text" (ETX) character which will terminate encryption.

The present invention provides an encryption apparatus, authentication information assignment apparatus, encryption method, and authentication information assignment method capable of preventing a cryptographic key or authentication key from being broken.

The present invention also provides an encryption apparatus, authentication information assignment apparatus, encryption method, and authentication information assignment method capable of reducing the overhead involved in the encryption or authentication.

The present invention also provides an encryption apparatus, authentication information assignment apparatus, encryption method, and authentication information assignment method capable of limiting an increase in the information amount involved in the encryption or in adding the authentication information.

According to a first aspect of the present invention, there is provided an encryption apparatus for encrypting and transmitting a bit stream of media information which is sent from a transmitting terminal, the encryption apparatus comprising: means for deciding the number of bits or difficulty of cryptanalysis of the bit stream; and means for encrypting a bit stream that is determined as being longer or more difficult to cryptanalyse than a predetermined criterion by the means of deciding, so that a bit stream that is determined as being shorter or less difficult to cryptanalyse than the predetermined criterion respectively is left unencrypted.

Thus, it can prevent the cryptographic key from being broken, and reduce the calculation amount of the encryption. In addition, it can prevent an increase in an information amount involved in the encryption.

Thus, it transmits the bit stream which can be cryptanalyzed easily without encryption, thereby making it possible to prevent the cryptographic key from being broken.

The type of the bit stream may be determined by difficulty in restoration of the media information after a part of ciphertext is cryptanalysis.

Thus, it transmits the bit stream which does not care intrusion of a third party, thereby making it possible to limit an increase in the information amount because of an overhead or padding involved in the encryption process.

According to a second aspect of the present invention, there is provided an authentication information assignment apparatus that provides authentication information to a bit stream of media information sent from a transmitting terminal, and sends them, the authentication information assignment apparatus comprising:
means for deciding the number of bits of the bit stream; and means for providing a bit stream that is determined as being larger than a predetermined value by said means for deciding, with the authentication information so that a bit-stream that is determined as being shorter than the predetermined value is left unchanged. Thus, it can prevent the authentication key from being broken, and reduce a calculation amount involved in providing the authentication information. In addition, it can prevent an increase in the information amount involved in providing the authentication information.

Here, the type of the bit stream may be determined by the number of bits or a degree of effect of tampering.

Thus, it transmits the bit stream, which does not care tampering of a third party, without providing the authentication information, thereby making it possible to prevent the authentication key from being broken.

According to a third aspect of the present invention, there is provided an encryption method performed by an encryption apparatus for encrypting and transmitting a bit stream of media information which is sent from a transmitting terminal, the encryption method comprising the steps of: deciding the number of bits of, or the difficulty of cryptanalysis of, the bit stream; and encrypting the bit stream which is determined as being longer or more difficult to cryptanalyse than a predetermined criterion, so that a bit stream that is determined as being shorter or less difficult to cryptanalse respectively is left unencrypted.

According to a fourth aspect of the present invention, there is provided an authentication information assignment method performed by an authentication information assignment apparatus that provides authentication information to a bit stream of media information sent from a transmitting terminal, and sends them, the authentication information assignment method comprising the steps of:
deciding the number of bits in the bit stream; and
providing a bit stream that is determined as being longer than a predetermined value by the means for deciding with the authentication information, so that a bit stream that is determined as being shorter than the predetermined value is left unchanged.

According to the present invention, it is possible to prevent cryptographic key or authentication key from being broken, and to increase the safety of the communication system.

In addition, since it is not necessary to encrypt or authenticate every packet and the encryption or authentication process are carried out selectively for each packet, the calculation amount of the encryption or authentication process can be reduced compared with the conventional apparatus. As a result, it can reduce the overhead and the processing delay.

Furthermore, it can limit an increase in the information amount involved in the padding in the encryption or adding of the authentication information.

The above and other objects, effects, features and advantages of the present invention will become more apparent from the following description of embodiments thereof taken in conjunction with the accompanying drawings.
Fig. 1 is a diagram illustrating an example of a procedure of conventional encryption;
Fig. 2 is a diagram illustrating an example of a procedure of conventional authentication information assignment;
Fig. 3 is a block diagram showing a configuration of an encryption/authentication assignment apparatus of a first embodiment in accordance with the present invention;
Fig. 4 is a diagram illustrating a transmission example of a bit stream in the first embodiment in accordance with the present invention;
Fig. 5A is a diagram illustrating a transmission example of a bit stream in a second embodiment in accordance with the present invention;
Fig. 5B is a diagram illustrating a transmission example of a bit stream in the second embodiment in accordance with the present invention;
Fig. 6 is a block diagram showing a configuration of a decryption/authentication apparatus of a third embodiment in accordance with the present invention;
Fig. 7 is a block diagram showing a configuration of a decryption/authentication apparatus of another embodiment in accordance with the present invention;
Fig. 8A is a diagram illustrating an example of a decryption/authentication apparatus for carrying out notification processing in a still another embodiment in accordance with the present invention; and
Fig. 8B is a diagram illustrating an example of a decryption/authentication apparatus for carrying out notification processing in another embodiment in accordance with the present invention.

The invention will now be described with reference to the accompanying drawings.

### FIRST EMBODIMENT

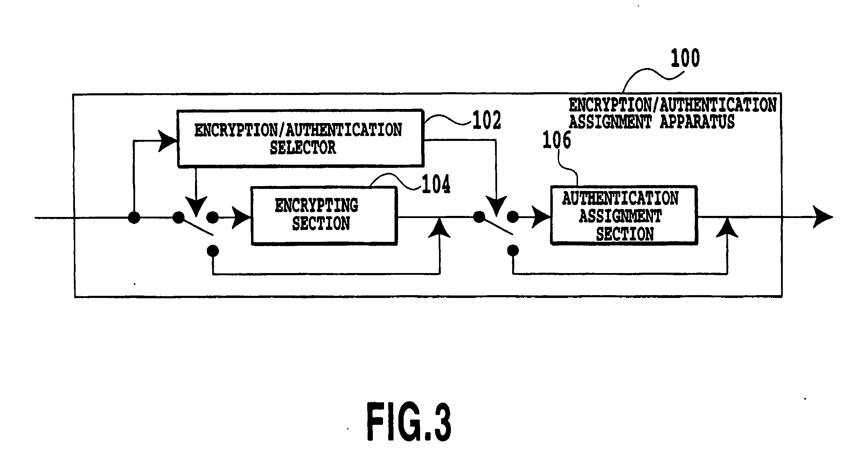

Fig. 3 is a block diagram showing a configuration of an encryption/authentication assignment apparatus of a first embodiment in accordance with the present invention, which shows only a portion relevant to the present invention.

An encryption/authentication assignment apparatus 100 associated with the present embodiment may be incorporated into a transmitting terminal, or constructed separately from the transmitting terminal, or built as a node like a base station between the transmitting terminal and a receiving terminal.

The encryption/authentication assignment apparatus 100 comprises an encryption/authentication selector 102 for selecting either the encryption of a bit stream of media information to be transmitted from the transmitting terminal, or the assignment of authentication information; an encrypting section 104 for carrying out encryption of the bit stream; and an authentication assignment section 106 for providing the bit stream with the authentication information.

The encryption/authentication selector 102 decides the type of the bit stream to be sent from the transmitting terminal. When a decision is made that it is the bit stream to undergo the encryption, the bit stream is transferred to the encrypting section 104. In contrast, when a decision is made that it is the bit stream to which the authentication information is to be assigned, the bit stream is transferred to the authentication assignment section 106. When the decision result indicates that neither encryption nor authentication is to be made, the bit stream is transmitted without change.

Here, the encryption/authentication assignment apparatus 100 functions as the encryption apparatus or authentication information assignment apparatus as defined in the claims.

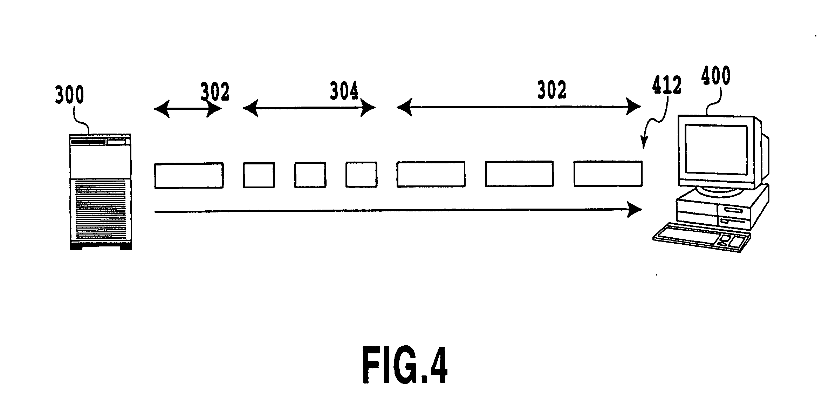

Next, an example of the operation of the encryption/authentication assignment apparatus 100 will be described with reference to Fig. 4.

In the present embodiment, the type of the encryption or authentication information is identified by the number of bits or the difficulty in cryptanalysis. Thus, among the packets to be transmitted, a bit stream with a small number of bits or a bit stream that can be cryptanalyzed easily is not encrypted or provided with the authentication information.

In the example as shown in Fig. 4, a voice stream is being sent from the transmitting terminal 300 to the receiving terminal 400, in which block 412 is a packet of the voice stream. A bit stream of the voice stream includes speech bursts 302 and speech pauses 304. The speech pauses 304 include noise information or the like and have a short packet length. Accordingly, when the ciphertext of these sections is intruded, it will be easily broken.

In view of this, although the speech bursts 302 are subjected to encryption or provided with the authentication information, the speech pauses 304 are not, and are sent without change. The encryption/authentication selector 102 in the encryption/authentication assignment apparatus 100 as shown in Fig. 3 carries out this selection by making a decision for each packet to be transmitted as to whether it is a speech burst or a speech pause.

Thus carrying out the encryption or the assignment of the authentication information selectively in accordance with the type of the bit stream can prevent the cryptographic key or authentication key from being broken, and limit an increase in the overhead.

### SECOND EMBODIMENT

In the second embodiment, the type of the bit stream of the media information is classified according to the difficulty in restoring the original media information after the ciphertext is decrypted. Thus, the bit stream is not encrypted from which it is difficult to restore the original media information even if a part of the multiple packets constituting the bit stream is cryptanalyzed. The present embodiment can also utilize the encryption/authentication assignment apparatus 100 as shown in Fig. 3 as the foregoing embodiment.

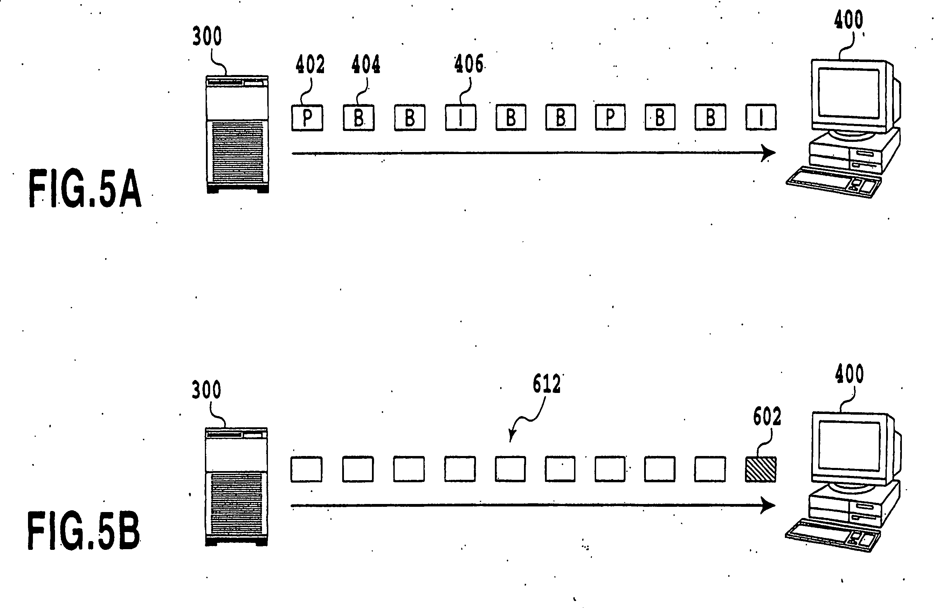

Referring to Figs. 5A and 5B, an example of the operation of the encryption/authentication assignment apparatus 100 with the configuration as shown in Fig. 3 will be described.

In the example as shown in Fig. 5A, a transmitting terminal 300 transmits motion picture information to a receiving terminal 400 according to MPEG1. In MPEG1, to carry out the bidirectional prediction of a motion picture (backward prediction from a future reference picture and forward prediction from a past reference picture), three types of pictures are defined: I-pictures (Intra coded pictures) 406, P-pictures (Predictive coded pictures) 402 and B-pictures (Bidirectionally predictive-coded pictures) 404. Among the three types of pictures, the I - pictures 406 are an intra-frame coded picture, from which the original bit stream can be easily restored if this type of the bit stream is broken. On the other hand, the P-pictures 402 and B-pictures 404 are a prediction coding picture consisting of the difference data between multiple motion pictures. Accordingly, it is difficult to restore the original media information even if only the bit stream of these types are cryptanalyzed.

Thus, the encryption/authentication selector 102 in the encryption/ authentication assignment apparatus 100 as shown in Fig. 3 decides the picture type of the motion picture data to be transmitted. Then, the encrypting section 104 encrypts it when it is the I-picture 406. On the other hand, as for the P-pictures 402 and B-pictures 404, they are transmitted without being transformed through the encryption.

Such a processing can limit an increase in the information amount by the overhead and padding involved in the encryption process.

Although the present embodiment is described by way of example of MPEG1, the present invention is also applicable to MPEG2 or MPEG4 that utilizes different types of pictures such as I-pictures , P-pictures and B-pictures as MPEG1.

The following examples are a few applications of the present embodiment.

When transmitting a file from the transmitting terminal 300 to the receiving terminal 400 by multiple packets, only one packet 602 among the packets 612 constituting the file can be encrypted and transmitted as shown in Fig. 5B. In this case, the original file cannot be restored by using only the information contained in the packets that are not encrypted. As an example of a portion to be encrypted, there is a packet including configuration information for file compression. In this case, the original file cannot be expanded from the remaining packet.

Alternatively, it is possible to divide the types of the bit streams according to the number of bits or the degree of effect of tampering, and to perform a selection process in such a manner that such a bit stream that has little effect even if its part undergoes tampering is not provided with the authentication information. For example, the authentication information is assigned to user information, billing information, configuration information and I-pictures of a video stream, and to a base layer of a layered coding stream. On the other hand, the authentication information is not provided to speech pause information of a voice stream, P-pictures and B-pictures or higher layer pictures in the layered coding.

For example, in the layer coding of video or voice, although the base layer can offer a certain degree of media quality, the enhancement layer is useless when separated from the base layer, and offers a higher media quality in combination with the base layer. Thus, only the base layer is encrypted, and the enhancement layer is transmitted without being transformed through the encryption.

The layered coding can be achieved by means of different spatial resolution (for example, QCIF for the base layer, CIF for the enhancement layer, etc.), or of different temporal resolution (10 frames/s for the base layer, 20 frames/s for the enhancement layer, etc.).

Such a processing can curb an increase in the information amount due to the overhead and padding involved in the encryption process.

### THIRD EMBODIMENT

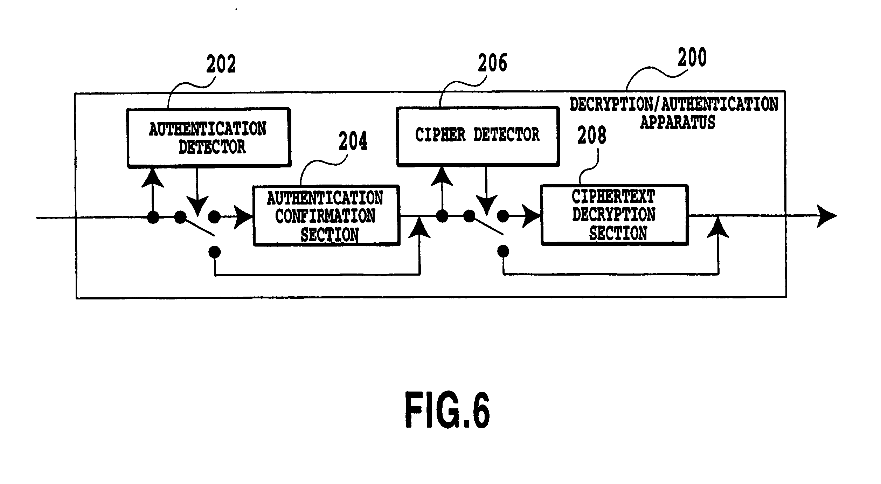

Fig. 6 is a block diagram showing a configuration of a decryption/authentication apparatus applicable to a communication system in accordance with the present invention, which shows only a portion relevant to the present invention.

The decryption/authentication apparatus 200 may be incorporated into a receiving terminal, or constructed separately from the receiving terminal. Alternatively, it may be configured as a node such as a base station between a transmitting terminal and a receiving terminal.

The decryption/authentication apparatus 200 comprises an authentication detector 202 for detecting that the received bit stream is provided with the authentication information; an authentication confirmation section 204 for making authentication of the received bit stream; a cipher detector 206 for detecting that the received bit stream is encrypted; and a ciphertext decryption section 208 for carrying out the decryption process of the received bit stream when it is encrypted.

The bit stream received by the decryption/authentication apparatus 200 is supplied to the authentication detector 202 that detects its authentication information. When it is detected, the bit stream is supplied to the authentication confirmation section 204. Then, the bit stream in which the authentication information is not detected, or the bit stream the authentication confirmation section 204 authenticates is transferred to the cipher detector 206. The cipher detector 206 detects whether the bit stream is encrypted or not. When it includes the ciphertext information, the received bit stream is supplied to the ciphertext decryption section 208 to be decrypted and then transmitted to the receiving terminal. When the cipher detector 206 does not recognize that the bit stream is encrypted, the received bit stream is transferred to the receiving terminal without change.

When the information is transferred according to the IP (Internet Protocol), the detection of the authentication information by the authentication detector 202, and the detection of the encryption by the cipher detector 206 are carried out by referring to the IP header added to the received data, for example. Specifically, referring to the protocol number contained in the "protocol" in the IP header, they can recognize whether the bit stream is encrypted, or the authentication information is provided. They can also detect them by the "payload type" in the RTP (Real-time Transport Protocol) header.

### FOURTH EMBODIMENT

The fourth embodiment relates to a combination of the encryption/authentication assignment apparatus 100 as shown in Fig. 3 with the decryption/authentication apparatus 200 as shown in Fig. 6.

The encryption/authentication selector 102 of the transmitting terminal 100 decides the type of the bit stream to be transmitted from the transmitting terminal. When a decision is made that it must undergo encryption, the bit stream is transferred to the encrypting section 104. In contrast, when a decision is made that it must be provided with the authentication information, the bit stream is transferred to the authentication assignment section 106. When a decision is made that it need not undergo the encryption or authentication, the bit stream is transferred without being transformed.

On the other hand, the bit stream received by the decryption/authentication apparatus 200 is supplied to the authentication detector 202 that detects its authentication information. When it is detected, the bit stream is transferred to the authentication confirmation section 204. In contrast, the bit stream in which the authentication information is not detected or the bit stream that is authenticated by the authentication confirmation section 204 is supplied to the cipher detector 206. The cipher detector 206 detects whether the bit stream is encrypted or not. When it includes the ciphertext information, the received bit stream is supplied to the ciphertext decryption section 208 that decrypts it, followed by transmitting it to the receiving terminal. When the cipher detector 206 does not detect that the bit stream is encrypted, the received bit stream is transferred to the receiving terminal without change.

### OTHER EMBODIMENTS

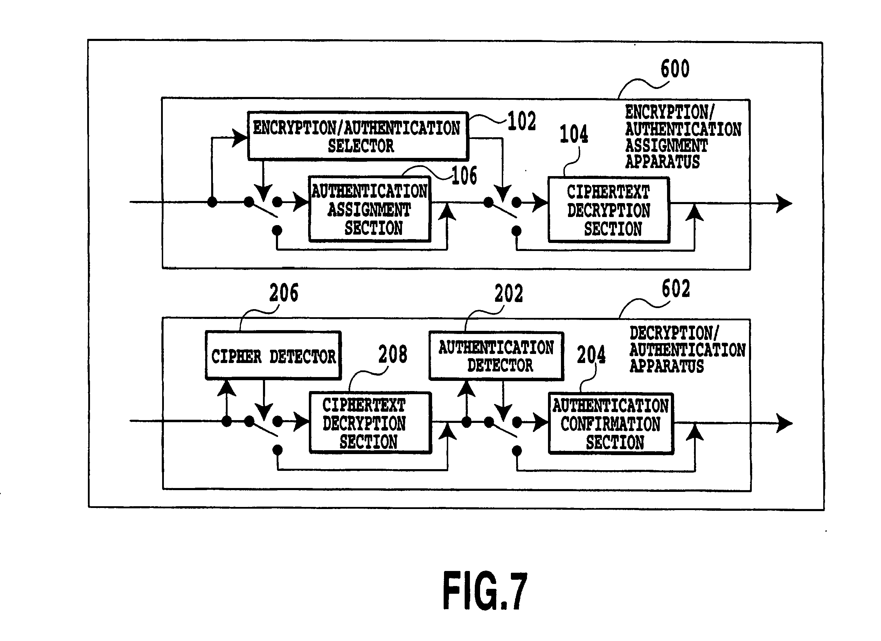

Although the foregoing embodiments are described by way of example of the encryption/authentication assignment apparatus 100 as shown in Fig. 3, the order of carrying out the encryption and the assignment of the authentication information is not limited to this. For example, as shown in an encryption/authentication assignment apparatus 600 as shown in Fig. 7, the order of the authentication assignment section 106 and the encrypting section 104 may be reversed.

Likewise, although the foregoing embodiments are described by way of example of the decryption/authentication apparatus 200 as shown in Fig. 6, the order of carrying out the authentication confirmation and decryption is not limited to this. For example, as shown in a decryption/authentication apparatus 602 as shown in Fig. 7, the ciphertext decryption process may precede the authentication process.

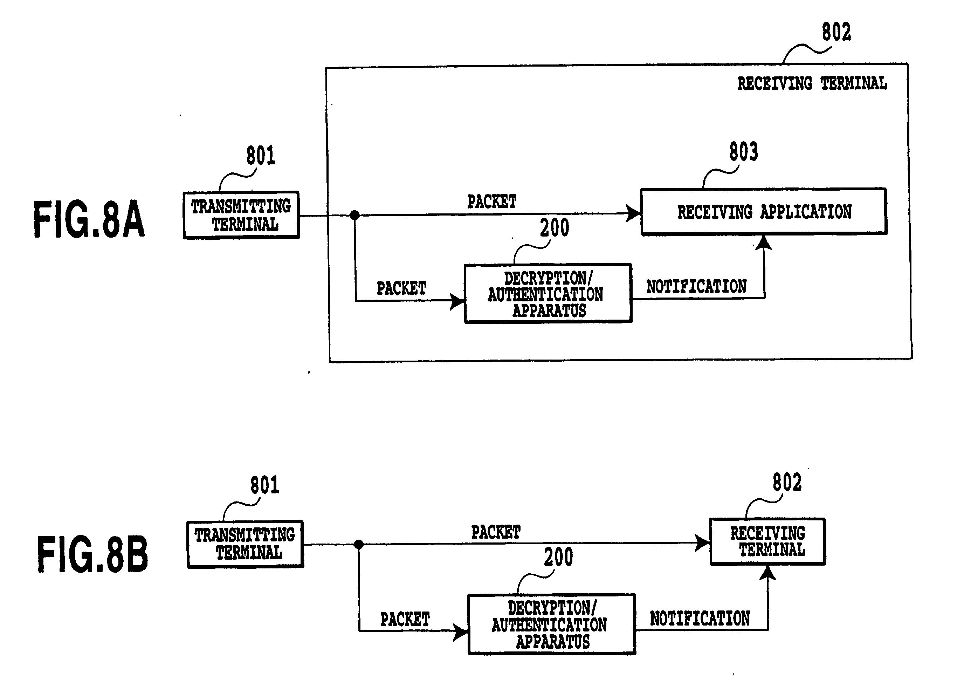

Alternatively, only the result indicating whether the authentication is correct or not may be notified without processing the packets after the authentication confirmation. For example, when a receiving terminal 802 incorporates the decryption/authentication apparatus 200 as shown in Fig. 8A, the packets transmitted from the transmitting terminal 801 are transferred to a receiving application 803 without change along with information from the authentication apparatus 200 indicating the authentication result by the authentication confirmation section 204 (for example, when the received bit stream is valid, the information indicating that it is valid). When the decryption/authentication apparatus 200 is separated from the receiving terminal 802 as shown in Fig. 8B, the notification processing is achieved by sending a notification from the decryption/authentication apparatus 200 to the receiving terminal 802.

The present invention has been described in detail with respect to preferred embodiments, and it will now be apparent from the foregoing to those skilled in the art that changes and modifications may be made without departing from the invention in its broader aspect.

## Claims

1. An encryption apparatus (100, 600) for encrypting and transmitting a bit stream of media information which is sent from a transmitting terminal, said encryption apparatus **characterized by** comprising:
means (102) for deciding the number of bits or difficulty of cryptanalysis of the bit stream; and means (104) for encrypting a bit stream that is determined as being longer or more difficult to cryptanalyse than a predetermined criterion by said means for deciding (102), so that a bit stream that is determined as being shorter or less difficult to cryptanalyse than the predetermined criterion respectively is left unencrypted.

2. An authentication information assignment apparatus that is adapted to provide authentication information to a bit stream of media information sent from a transmitting terminal, and to send them, said authentication information assignment apparatus **characterized by** comprising:
means for deciding the number of bits of the bit stream; and
means for providing a bit stream that is determined as being longer than a predetermined value by said means for deciding, with the authentication information, so that a bit stream that is determined as being shorter than the predetermined value is left unchanged.

3. An encryption method performed by an encryption apparatus (100, 600) for encrypting and transmitting a bit stream of media information which is sent from a transmitting terminal, said encryption method **characterized by** comprising the steps of:
deciding the number of bits of, or the difficulty of cryptanalysis of, the bit stream; and encrypting the bit stream which is determined as being longer or more difficult to cryptanalyse than a predetermined criterion, so that a bit stream that is determined as being shorter or less difficult to cryptanlyse than the predetermined criterion respectively is left unencrypted.

4. An authentication information assignment method performed by an authentication information assignment apparatus that provides authentication information to a bit stream of media information sent from a transmitting terminal, and sends them, said authentication information assignment method **characterised by** comprising the steps of:
deciding the number of bits in the bit stream; and
providing a bit stream that is determined as being longer than a predetermined value by the step of
deciding with the authentication information, so that a bit stream that is determined as being shorter than the predetermined value is left unchanged.

## Patentansprüche

1. Verschlüsselungsvorrichtung (100, 600) zum Verschlüsseln und Übertragen eines Bitstroms von Medieninformationen, die von einem übertragenden Endgerät gesendet werden, **gekennzeichnet durch**:
eine Einrichtung (102) zum Feststellen der Anzahl von Bits oder einer Schwierigkeit einer Kryptoanalyse des Bitstroms; und
eine Einrichtung (104) zum Verschlüsseln eines Bitstroms, der von der Einrichtung (102) zum Feststellen als länger oder schwieriger zum Kryptoanalysieren bestimmt wird als ein vorbestimmtes Kriterium, so dass ein Bitstrom, der als kürzer oder weniger schwierig zum Kryptoanalysieren bestimmt wird als das vorbestimmte Kriterium, unverschlüsselt bleibt.

2. Authentisierungsinformationszuordnungsvorrichtung, die angepasst ist zum Versehen eines Bitstroms von Medieninformationen, die von einem übertragenden Endgerät gesendet werden, mit Aüthentisierungsinformationen und zum Senden dieser, **gekennzeichnet durch**:
eine Einrichtung zum Feststellen der Anzahl von Bits des Bitstroms; und
eine Einrichtung zum Versehen eines Bitstroms, der von der Einrichtung zum Feststellen als länger bestimmt wird als ein vorbestimmter Wert, mit den Authentisierungsinformationen, so dass ein Bitstrom, der als kürzer bestimmt wird als der vorbestimmte Wert, unverändert bleibt.

3. Verschlüsselungsverfahren, das von einer Verschlüsselungsvorrichtung (100, 600) zum Verschlüsseln und Übertragen eines Bitstroms von Medieninformationen, die von einem übertragenen Endgerät gesendet werden, durchgeführt wird, **gekennzeichnet durch** die Schritte:
Feststellen der Anzahl von Bits oder der Schwierigkeit einer Kryptoanalyse des Bitstroms; und
Verschlüsseln des Bitstroms, der als länger oder schwieriger zum Kryptoanalysieren bestimmt wird als ein vorbestimmtes Kriterium, so dass ein Bitstrom, der als Kürzer oder weniger schwierig zum Kryptoanalysieren bestimmt wird als das vorbestimmte Kriterium, unverschlüsselt bleibt.

4. Authentisierungsinformationszuordnungsverfahren, das von einer
Authentisierungsinformationszuordnungsvorrichtung durchgeführt wird, die einen Bitstrom von Medieninformationen, die von einem übertragenden Endgerät gesendet werden, mit Authentisierungsinformationen versieht und diese sendet, **gekennzeichnet durch** die Schritte:
Feststellen der Anzahl von Bits in dem Bitstrom; und
Versehen eines Bitstroms, der von dem Feststellungsschritt als länger bestimmt wird als ein vorbestimmter Wert, mit den Authentisierungsinformationen, so dass ein Bitstrom, der als kürzer bestimmt wird als der vorbestimmte Wert, unverändert bleibt.

## Revendications

1. Dispositif (100, 600) de chiffrement et de transmission d'un train de bits d'information multimédia, qui est envoyé par un terminal de transmission, le dispositif de chiffrement étant **caractérisé en ce qu'**il comprend :
des moyens (102) pour décider du nombre de bits et d'une difficulté d'analyse cryptologique du train de bits ; et
des moyens (104) de chiffrement d'un train de bits qui est déterminé comme étant plus long ou plus difficile à analyser par analyse cryptologique qu'un critère déterminé à l'avance par les moyens de décision (102), de sorte qu'un train de bits qui est déterminé comme étant plus court ou moins difficile à analyser par analyse cryptologique que le critère déterminé au préalable, reste, respectivement, non chiffré.

2. Dispositif d'attribution d'une information d'authentification qui est conçu pour donner une information d'authentification à un train de bits d'une information multimédia, envoyé à partir d'un terminal de transmission, et pour les envoyer, le dispositif d'attribution d'information d'authentification étant **caractérisé en ce qu'**il comprend :
des moyens pour décider du nombre de bits du train de bits ; et
des moyens pour fournir un train de bits qui est déterminé comme étant plus long qu'une valeur déterminée à l'avance par les moyens de décision, l'information d'authentification étant telle qu'un train de bits, qui est déterminé comme étant plus court que la valeur déterminée à l'avance, est laissé sans modification.

3. Procédé de chiffrement effectuer par un dispositif (100, 600) de chiffrement pour chiffrer et transmettre un train de bits d'information multimédia, qui est envoyé par un terminal de transmission, le procédé de chiffrement étant **caractérisé en ce qu'**il comprend les stades dans lesquels :
on décide du nombre de bits du train de bits ou de la difficulté d'analyse cryptologique du train de bits ; et
on chiffre le train de bits qui est déterminé comme étant plus long ou plus difficile à analyser par cryptologie qu'un critère déterminé à l'avance, de sorte qu'un train de bits, qui est déterminé comme étant plus court ou moins difficile à analyser par analyse cryptologique que le critère déterminé à l'avance respectivement, reste non chiffré.

4. Procédé d'attribution d'une information d'authentification effectuée par un dispositif d'attribution d'information d'authentification qui donne l'information d'authentification à un train de bits d'une information multimédia, envoyé à partir d'un terminal de transmission, et qui les envoie, **caractérisé en ce que** le procédé d'attribution d'une information d'authentification comprend les stades dans lesquels :
on décide du nombre de bits dans le train de bits ; et
on fournit un train de bits qui est déterminé comme étant plus long qu'une valeur déterminée à l'avance par la décision par l'information d'authentification de façon à ce qu'un train de bits, qui est déterminé comme étant plus court que la valeur déterminée à l'avance, reste inchangé.
